# EUROPEAN PATENT APPLICATION

(11) **EP 4 231 480 A1**
(43) Date of publication of application: **23.08.2023**
(21) Application number: 21946882.4
(22) Date of filing: 24.12.2021
(51) Int. Cl.: H02J 3/38, G05F 1/67, H02S 40/30

(54) **PHOTOVOLTAIC POWER GENERATION SYSTEM CONTROL METHOD AND APPARATUS, POWER OPTIMIZER, AND STORAGE MEDIUM**

(30) Priority: 25.06.2021 CN 202110710849
(71) Applicant: Xi'an Linchr New Energy Technology Co., Ltd., Xi'an, Shaanxi 710000 (CN)
(72) Inventor: WEI, Jianrong, Shaanxi 710000 (CN); FAN, Yangping, Shaanxi 710000 (CN); FU, Yong, Shaanxi 710000 (CN); LV, Jian, Shaanxi 710000 (CN)
(74) Representative: Barker Brettell LLP
(86) International application number: PCT/CN2021/141371
(87) International publication number: WO 2022/267409

(57) **Abstract**

The present invention provides a photovoltaic power generation system control method and apparatus, a power optimizer, and a storage medium, and relates to the technical field of power electronics, which includes that: an input current and an input voltage of a power optimizer are acquired; a actual input power is obtained based on the input voltage and the input current; a output power is obtained based on the actual input power and a pre-generated first mapping curve; the first mapping curve is used for indicating a corresponding relation between a output voltage and the output power of the power optimizer, the first mapping curve includes: a first voltage segment linear power curve and a second voltage segment linear power curve, and the voltage corresponding to a second voltage segment is higher than the voltage corresponding to a first voltage segment; a bus voltage corresponding to the output power is output to a post-stage photovoltaic inverter so that the post-stage photovoltaic inverter determines a target maximum power based on the bus voltage. With the solution, the competitive relation between the "power optimizer" and the "photovoltaic inverter" are configured to be effectively balanced, and the situation of mismatch shocks can be avoided.

## Description

### Cross-Reference to Related Application

The present invention claims priority to Chinese Patent Application No. 2021107108498, filed to the China National Intellectual Property Administration on June 25, 2021 and entitled "Photovoltaic Power Generation System Control Method and Apparatus, Power Optimizer, and Storage Medium", the entire contents of which are herein incorporated by reference.

### Technical Field

The present invention relates to the technical field of power electronics, and in particular to a photovoltaic power generation system control method and apparatus, a power optimizer, and a storage medium.

### Background

Photovoltaic power generation is a technology that directly converts light energy into electric energy through the photovoltaic effect at a semiconductor interface. It is mainly composed of a photovoltaic panel (component), a controller and an inverter, and the main components are composed of electronic parts and components. Solar cells are packaged and protected after being connected in series to form a large-area solar cell module, and then a photovoltaic power generation apparatus is formed by cooperating with a power controller and other components.

Currently, in the photovoltaic power generation systems, centralized and distributed systems are included. In the centralized photovoltaic system, photovoltaic panels are generally connected in series to form a high voltage input to the photovoltaic inverter, and the photovoltaic inverter performs a Maximum Power Point Tracking, MPPT, function; and in the distributed photovoltaic system, the photovoltaic inverter is composed of two stages, the front stage DC/DC completes the boosting and MPPT functions, and the post stage completes the functions of stabilizing input voltage and inverting. In addition, for the current centralized and distributed systems, in response to the photovoltaic panel being configured with a power optimizer, the photovoltaic inverter is connected to the rear stage of the power optimizer, the power optimizer performs the boosting, isolation, MPPT and other functions, and the photovoltaic inverter completes the functions of stabilizing input voltage and inverting.

However, in the photovoltaic power generation system of related art, the case that a module of the "power optimizer" or "photovoltaic inverter" performs the MPPT function is considered, however, in response to the "photovoltaic inverter" performing MPPT tracking, the "power optimizer" DC/DC also performs MPPT tracking, then there are two DC/DC units of MPPTs in the whole system, in addition, the DC/DC units of the two levels of MPPT are trying to seek the maximum power point through a disturbance strategy, which may lead to a certain competition between the two levels of MPPT, and may even cause mismatch shocks.

### Summary

The invention provides a photovoltaic power generation system control method and apparatus, a power optimizer, and a storage medium in order to balance the competitive relation between a power optimizer and a photovoltaic inverter for avoiding the situation of mismatch shocks, thereby at least overcoming the above-mentioned advantages in the related art.

At least some embodiments of the present invention provides a photovoltaic power generation system control method and apparatus, applied to a power optimizer in the photovoltaic power generation system, including:.
acquiring an input current and an input voltage of the power optimizer;
obtaining an actual input power based on the input voltage and the input current;
obtaining an output power based on the actual input power and a pre-generated first mapping curve; wherein the first mapping curve is used for indicating a corresponding relation between an output voltage and the output power of the power optimizer, the first mapping curve comprises: a first voltage segment linear power curve and a second voltage segment linear power curve, wherein a voltage corresponding to a second voltage segment is higher than the voltage corresponding to a first voltage segment;
outputting a bus voltage corresponding to the output power to a post-stage photovoltaic inverter so that the post-stage photovoltaic inverter determines a target maximum power based on the bus voltage.

In an optional embodiment, the first mapping curve further including: a third voltage segment constant power segment, and a voltage corresponding to a third voltage segment may be higher than the voltage corresponding to the first voltage segment and the voltage corresponding to the third voltage segment islower than the voltage corresponding to the second voltage segment;
the first voltage segment linear power curve is a linear curve in which power increases with increase of voltage or power decreases with decrease of voltage, and the second voltage segment linear power curve is a linear curve in which power decreases with increase of voltage or power increases with decrease of voltage.

In an optional embodiment, obtaining the output power based on the actual input power and the pre-generated first mapping curve further including:
in response to detecting that the bus voltage after disturbance of the post-stage photovoltaic inverter is in the first voltage segment or the second voltage segment, obtaining the output power based on the first voltage segment linear power curve or the second voltage segment linear power curve.

In an optional embodiment, obtaining the output power based on the actual input power and the pre-generated first mapping curve further including:
in response to detecting that the bus voltage after disturbance of the post-stage photovoltaic inverter is in the third voltage segment, obtaining the output power based on the third voltage segment constant power segment.

In an optional embodiment, obtaining the output power based on the third voltage segment constant power segment including:
in response to the actual input power being less than or equal to the maximum limit power of the power optimizer, determining the actual input power as the output power.

In an optional embodiment, obtaining the output power based on the third voltage segment constant power segment further including:
in response to the actual input power being greater than the maximum limit power, determining the maximum limit power as the output power.

In an optional embodiment, before obtaining the output power based on the actual input power and the pre-generated first mapping curve, the method further including:
adjusting the corresponding relation between the first voltage segment and the output power and the corresponding relation between the second voltage segment and the output power to obtain the first mapping curve.

In an optional embodiment, the adjusting the corresponding relations between the first voltage segment and the second voltage segment and the output power respectively including:
adjusting the corresponding relation between the first voltage segment and the output power to the linear relation that the power increases with increase of the voltage;
adjusting the corresponding relation between the second voltage segment and the output power to the linear relation that the power decreases with increase of the voltage.

In an optional embodiment, after the output power is obtained based on the actual input power and the pre-generated first mapping curve, the method further including:
determining a first given current based on a maximum power point and a given voltage corresponding to the maximum power point; the maximum power point is obtained by disturbance of a maximum power point unit in the power optimizer based on the input voltage and the input current;
determining a second given current based on the output power and the output voltage corresponding to the output power;
determining a minimum given current based on the first given current and the second given current;
adjusting a duty cycle of the power optimizer ithrough the minimum given current.

An embodiment of present invention further provide an apparatus for controlling a photovoltaic power generation system, including: an acquisition module, a processing module and a determination module.
the acquisition module, configured to acquire input current and input voltage of a power optimizer;
the processing module, configured to obtain an actual input power based on the input voltage and the input current, and obtain an output power based on the actual input power and a pre-generated first mapping curve; the first mapping curve is configured for indicating the corresponding relation between an output voltage and the output power of the power optimizer, the first mapping curve may include: a first voltage segment linear power curve and a second voltage segment linear power curve, and the voltage corresponding to a second voltage segment is higher than the voltage corresponding to a first voltage segment;
the determination module, configured to an output bus voltage corresponding to the output power to a post-stage photovoltaic inverter so that the post-stage photovoltaic inverter determines a target maximum power based on the bus voltage.

In an optional embodiment, the first mapping curve may further including: a third voltage segment constant power segment, and the voltage corresponding to a third voltage segment is higher than the voltage corresponding to the first voltage segment and lower than the voltage corresponding to the second voltage segment;
the first voltage segment linear power curve may be a linear curve in which power increases with increase of voltage or power decreases with decrease of voltage, and the second voltage segment linear power curve is configured to be a linear curve in which power decreases with increase of voltage or power increases with decrease of voltage.

In an optional embodiment, the processing module is further configured to:
in response to the bus voltage after disturbance of the post-stage photovoltaic inverter being detected and being in the first voltage segment or the second voltage segment, obtaining the output power based on the first voltage segment linear power curve or the second voltage segment linear power curve.

In an optional embodiment, the processing module is further configured to:
in response to the bus voltage after disturbance of the post-stage photovoltaic inverter being detected and being in the third voltage segment, obtaining the output power based on the third voltage segment constant power segment.

In an optional embodiment, the processing module is further configured to:
in response to the actual input power being less than or equal to the maximum limit power of the power optimizer, determining the actual input power as the output power.

In an optional embodiment, the processing module is further configured to:
in response to the actual input power being greater than the maximum limit power, determining the maximum limit power as the output power.

In an optional embodiment, the apparatus further includes an adjusting module.
the adjusting module is configured to adjust the corresponding relations between the first voltage segment and the second voltage segment and the output power respectively to obtain the first mapping curve.

In an optional embodiment, the adjusting module is further configured to:
adjust the corresponding relation between the first voltage segment and the output power to the linear relation that the power increases with increase of the voltage;
adjust the corresponding relation between the second voltage segment and the output power to the linear relation that the power decreases with increase of the voltage.

In an optional embodiment, the processing module is further configured to:
determine a first given current based on a maximum power point and a given voltage corresponding to the maximum power point; the maximum power point is obtained by disturbance of a maximum power point unit in the power optimizer based on the input voltage and input current; determine a second given current based on the output power and the output voltage corresponding to the output power; and obtain a minimum given current based on the first given current and the second given current;
the adjusting module, configured to adjust a duty cycle of the power optimizer through the minimum given current.

An embodiment of present invention further provide a power optimizer, which including: at least one processor, a storage medium and at least one bus. The storage medium stores at least one computer-readable instruction executable by the at least one processor. In response to the power optimizer executing, the at least one processor communicates with the storage medium through the bus, and the at least one processor executes the computer-readable instruction to execute the steps of the method for controlling the photovoltaic power generation system provided as claimed in the above-mentioned embodiments.

An embodiment of present invention further provide a computer readable storage medium, and a computer program is stored on the computer readable storage medium. In response to executing by at least one processor, the computer program executes the processes of the method for controlling the photovoltaic power generation system provided based on the above-mentioned embodiments.

The present invention at least has the following beneficial effects.

The embodiments of the present invention provide a method and apparatus for controlling a photovoltaic power generation system, a power optimizer, and a storage medium, the method including: acquiring input current and input voltage of a power optimizer; obtaining an actual input power based on the input voltage and the input current; obtaining an output power based on the actual input power and a pre-generated first mapping curve; wherein the first mapping curve is configured for indicating the corresponding relation between an output voltage and the output power of the power optimizer, the first mapping curve comprises: a first voltage segment linear power curve and a second voltage segment linear power curve, wherein the voltage corresponding to a second voltage segment is higher than the voltage corresponding to a first voltage segment; outputting a bus voltage corresponding to the output power to a post-stage photovoltaic inverter so that the post-stage photovoltaic inverter determines a target maximum power based on the bus voltage.. In the present invention, the external characteristics of the relation curve of power and voltage of high and low voltage segments of the power optimizer are adjusted, so that in response to the first MPPT unit disturbs near Vo1 (or Vo4), output power may be obtained based on the actual input power and the pre-generated first mapping curve, and bus voltage corresponding to the output power is output to the rear-stage photovoltaic inverter in order to enable the rear-stage photovoltaic inverter to disturb the bus voltage to obtain the target maximum power of photovoltaic power generation system, the phenomenon that in response to the first MPPT unit in the power optimizer disturbs near Vo1(or Vo4) , the output power Po of the power optimizer jumps from constant power to 0 is effectively avoided, the power optimizer may automatically adapt to the disturbance voltage change of the "photovoltaic inverter" connected at the rear stage to effectively balance the competitive relation between the "power optimizer "and the "photovoltaic inverter", and avoid the mismatch shocks situation.

### Brief Description of the Drawings

In order to describe the technical solutions in the embodiments of the invention more clearly, the drawings required to be used in descriptions about the embodiments will be simply introduced below, it is to be understood that the drawings described below are some embodiments of the invention and are therefore not to be considered limiting of scope, and other drawings may further be obtained by those of ordinary skill in the art based on these drawings without creative work.
Fig. 1 is a schematic structure diagram of a photovoltaic power generation system according to an embodiment of the present invention.
Fig. 2 is a schematic structure diagram of a power optimizer according to an embodiment of the present invention.
Fig. 3 is a schematic flow diagram of a method for controlling the photovoltaic power generation system according to an embodiment of the present invention.
Fig. 4 is a schematic diagram of an external characteristic curve of output voltage and output power of the power optimizer in the related art.
Fig. 5 is a schematic diagram of the external characteristic curve of output voltage and output power of the power optimizer according to an embodiment of the present invention.
Fig. 6 is a schematic flow diagram of another method for controlling the photovoltaic power generation system according to an embodiment of the present invention.
Fig. 7 is a schematic diagram of working principle of an MPPT unit and the output voltage limiting power loop in a power optimizer in a method for controlling the photovoltaic power generation system according to an embodiment of the present invention.
Fig. 8 is a schematic diagram of an overall process of a method for controlling the photovoltaic power generation system according to an embodiment of the present invention.
Fig. 9 is a schematic structure diagram of an apparatus for controlling the photovoltaic power generation system according to an embodiment of the present invention.

Reference signs: 100. Photovoltaic power generation system; 101. Power optimizer; 102. Photovoltaic inverter.

### Detailed Description

In order to make the purposes, technical solutions and advantages of the embodiments of the invention clearer, the technical solutions in the embodiments of the invention will be described clearly and completely below with reference to the accompanying drawings in the embodiments of the invention, it is to be understood that the drawings are only for the purpose of illustration and description, and are not used to limit the scope of protection of the invention. In addition, it is to be understood that the schematic drawings are not drawn to scale. The flowcharts used in the invention illustrate operations implemented in accordance with some embodiments of the invention. It is to be understood that the operations of the flowcharts may be performed out of order and the steps without logical context may be performed in reverse order or concurrently. In addition, those skilled in the art can add at least one other operations to the flowchart, and can also remove at least one operations from the flowchart under the guidance of the content of the invention.

In addition, the described embodiments are only a part but not all of the embodiments of the invention. Components of the embodiments of the invention generally described and illustrated here in the drawings may be arranged and designed in various different configurations. Therefore, the following detailed descriptions of the embodiments of the invention provided in the drawings are not intended to limit the scope of the claimed invention, but only represent selected embodiments of the invention. All other embodiments obtained by those skilled in the art based on the embodiments in the invention without creative work shall fall within the scope of protection of the invention.

It should be noted that the term "including" will be used in the embodiments of the invention to indicate the existence of the features declared later, but does not exclude the addition of other features.

First, before the detailed description of the technical solution provided by the invention, the working principle of the MPPT unit involved in the invention will be briefly explained.

The working principle of the MPPT unit: the power generation voltage and current of photovoltaic panels are detected in real time, the direction of disturbance in the next cycle is determined by measuring the changes of the output power and voltage of the photovoltaic panels before and after disturbance, in response to the disturbance direction being correct, the output power of the photovoltaic panels increases, the next cycle continues disturbance in the same direction, vice versa, disturbance is carried out towards the reverse direction, disturbance and observation are repeated to realize the tracking for the MPP of the photovoltaic panels.

Second the technical problems to be solved by the invention will be briefly explained.

In the related art, the "power optimizer" and "photovoltaic inverter" are configured and manufactured by different manufacturers, the "power optimizer" or "photovoltaic inverter" in the photovoltaic power generation system is considered to perform the tracking for the MPP based on the power-voltage characteristic curve of the photovoltaic power generation system, so that the photovoltaic power generation system may work at the MPP to make full use of solar energy resources, and the purpose of improving the energy conversion efficiency of photovoltaic power generation system is achieved.

However, in response to both the "power optimizer" and "photovoltaic inverter" being disposed in the photovoltaic power generation system, the DC/DC units of MPPTs in the "power optimizer" and the "photovoltaic inverter" are trying to seek respective maximum power points through a disturbance strategy, that is, the competitive relation between the "power optimizer" and the "photovoltaic inverter" may cause mismatch shocks.

Therefore, it is urgent to provide a power regulation method with adaptive coordination strategy to achieve the purpose that in response to the "power optimizer" and the "photovoltaic inverter" being cascated, the competitive relation between the "power optimizer" and the "photovoltaic inverter" may be effectively balanced regardless of whether the rear-stage "photovoltaic inverter" has the MPPT function or not to avoid the situation of mismatch shocks.

The inventive concept of the solutions of the invention is: the relation curve of power and voltage of high and low voltage segments of the power optimizer is adjusted, so that in response to seeking the MPP, the "power optimizer" in the photovoltaic power generation system may automatically adapt to power change of the "photovoltaic inverter" connected at the rear stage, thereby effectively balancing the competitive relation between the "power optimizer" and the "photovoltaic inverter" , and avoiding the situation of mismatch shocks.

As follows, the specific implementation steps and beneficial effects of the method for controlling a photovoltaic power generation system provided by the invention will be illustrated by several specific embodiments.

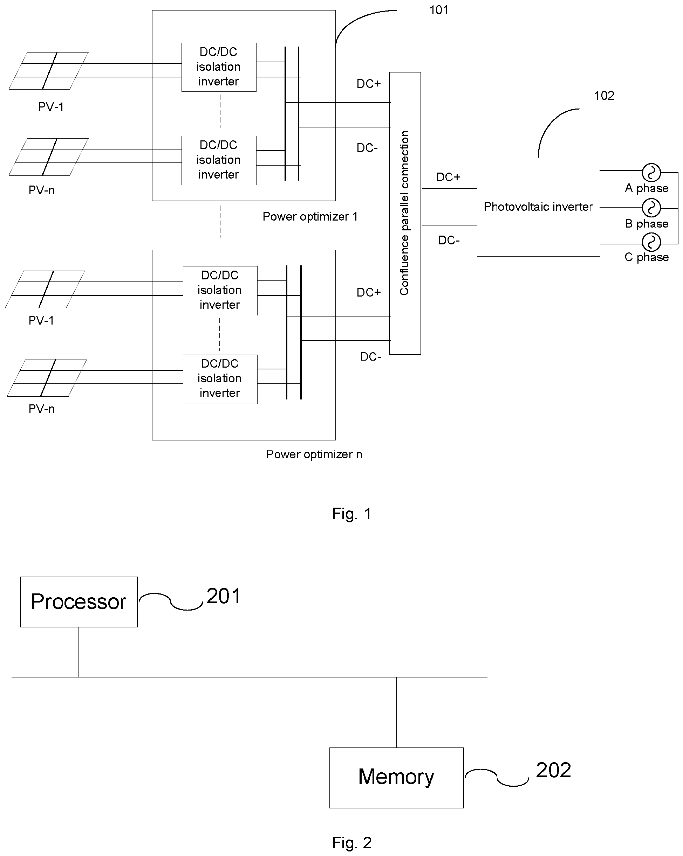

Fig. 1 is a schematic structure diagram of a photovoltaic power generation system according to a embodiment of the present invention. As shown in Fig. 1, the photovoltaic power generation system 100 including: photovoltaic panels (PV-1, ...PV-n) electrically connected in sequence, at least one power optimizer 101 and a photovoltaic inverter 102.

As shown in Fig. 1, the embodiments of the invention provide a distributed photovoltaic power generation system, the power optimizer 101 adopt a multi-channel isolation boost solution, multi-channel independent operation of MPPT, the maximum power of each photovoltaic panel is tracked, the conversion efficiency is high, and parallel networking is output.

For example, in the photovoltaic power generation system 100, the photovoltaic panels (PV-1,... Pv-n) may be connected to the power optimizer 101, the photovoltaic panels input generated voltage and current to the power optimizer, each power optimizer 101 independently executes MPPT with input, so that the power optimizer 101 may detect the power generation voltage of the photovoltaic panel in real time, meanwhile, according to the method for controlling the photovoltaic power generation system provided by the invention, the actual output power of the power optimizer 101 is obtained, multiple power optimizers output respective output voltages in parallel to form DC bus voltage (DC+, DC-), the photovoltaic inverter 102 obtains the target maximum power of the photovoltaic power generation system 100 based on the DC bus voltage, and finally, the photovoltaic inverter 102 converts the DC voltage corresponding to the target maximum power into AC voltage for grid-connected output.

Fig. 2 is a schematic structure diagram of a power optimizer according to a embodiment of the present invention, as shown in Fig. 2, the power optimizer 101 including: at least one processor 201 and a memory 202.

The processor 201 and the memory 202 are directly connected or indirectly electrically connected to realize data transmission or interaction. For example, electrical connection may be realized through at least one communication bus or signal line.

The processor 201 may be an integrated circuit chip, which has a signal processing capability. The processor 201 may be a general-purpose processor, such as a Central Processing Unit (CPU) and a Network Processor (NP). Each method, step or logic block diagram disclosed in the embodiments of the invention may be implemented or executed. The universal processor may be a microprocessor, or any conventional processor, etc.

The memory 202 may be, but is not limited to, a Random Access Memory (RAM), a Read Only Memory (ROM), a Programmable Read-Only Memory (PROM), an Erasable Programmable Read-only Memory (EPROM), an Electric Erasable Programmable Read-only Memory (EEPROM), etc.

The memory 202 is configured to store a program, and the processor 201 calls the program stored in the memory 202 to execute the method for controlling the photovoltaic power generation system provided by the following embodiments.

It can be understood that the structure shown in Fig. 2 is schematic, the power optimizer may also include more or fewer components than shown in Fig. 2, or has a different configuration from that shown in Fig. 2. Each component shown in Fig. 2 may be implemented in a hardware form, a software form or a combination thereof.

The implementation principle and correspondingly generated beneficial effects of the method for controlling a photovoltaic power generation system provided by the invention will be illustrated by several specific embodiments.

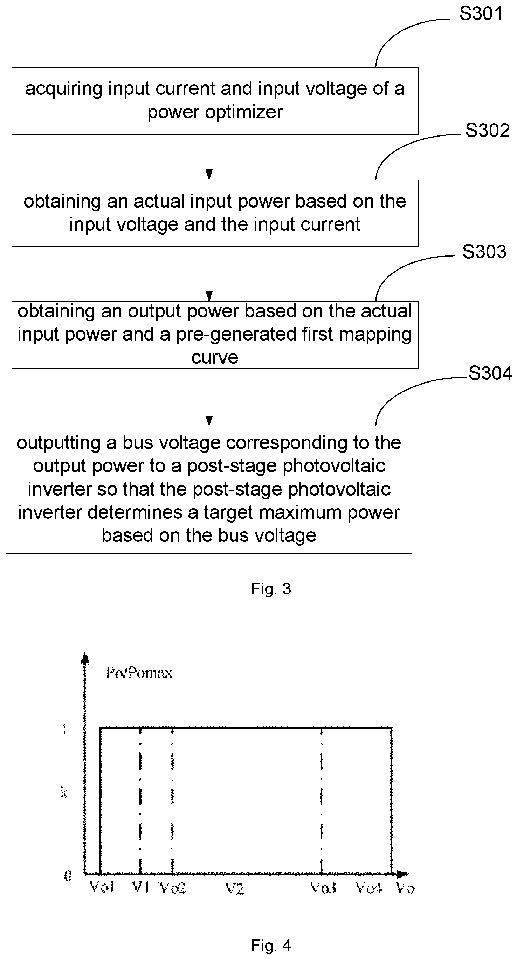

Fig. 3 is a schematic flow diagram of a method for controlling a photovoltaic power generation system according to a embodiment of the present invention. An execution subject of the method may be the power optimizer as shown in Fig. 1 and Fig. 2, as shown in Fig. 3, the method include the following steps:
In step S301, acquiring input current and input voltage of a power optimizer.
In step S302, obtaining an output power based on the actual input power and a pre-generated first mapping curve.

As shown in Fig. 1, under the irradiation of sunlight, a photovoltaic panel will generate voltage and current, which are transmitted to the power optimizer through a wire, and serve as input voltage Uin and input current lin of the power optimizer. According to the received input voltage Uin and input current lin, the power optimizer calculates to obtain the actual input power Pin = Uin*lin of the power optimizer.

In step S303, obtaining the output power based on the actual input power and a pre-generated first mapping curve.

The first mapping curve may be configured for indicating the corresponding relation between output voltage and the output power of the power optimizer, the first mapping curve may including: a first voltage segment linear power curve and a second voltage segment linear power curve, and the voltage corresponding to a second voltage segment is higher than the voltage corresponding to a first voltage segment.

The maximum limit power of the power optimizer is denoted as Pomax.

It is to be noted that the relation between the output voltage Uo of the "power optimizer" in the photovoltaic power generation system and the bus voltage of the "photovoltaic inverter" is simply explained.
1. In the embodiment, the power optimizer is provided with a first MPPT unit inside, the first MPPT unit disturbs the input voltage Uin to seek the MPP in response to the photovoltaic panel working, according to the maximum power in response to the photovoltaic panel working and the maximum limit power of the power optimizer, the output power Po and output voltage Uo of the "power optimizer" may be obtained.
2. The power optimizer detect its own output voltage Uo, that is, bus voltage at DC+ and DC-ends of the photovoltaic inverter in real time, but the "second MPPT unit" in the photovoltaic inverter may disturb the bus voltage at DC+ and DC- ends, so that the bus voltage will change to seek the target maximum power of the photovoltaic power generation system.

Fig. 4 is a schematic diagram of an external characteristic curve of output voltage and output power of a power optimizer in the related art; as shown in Fig. 4, in the related art, the external characteristic curve of the output voltage Uo and the output power Po is a constant power curve from Vo1 to Vo4, the horizontal coordinate is the output voltage Uo of the power optimizer, and the vertical coordinate is the ratio of the output power Po of the power optimizer to the maximum limit power Pomax, that is, Po/Pomax.

However, in response to the power optimizer detecting that the bus voltage (DC+, DC-) currently disturbed by the photovoltaic inverter is at Vo1 (or Vo4) point, further, in response to the MPPT unit of the power optimizer conducting disturbance at Vo1(or Vo4) point for tracking the maximum power point, the phenomenon that the output power Po jumps from constant power to 0 may be caused, then the power optimizer enters into a cut-off area, the rear-stage photovoltaic inverter may not work normally, that is, the power optimizer and photovoltaic inverter have mismatch shocks.

Therefore, the invention proposes that the external characteristics of the relation curve of power and voltage of high and low voltage segments of the power optimizer are adjusted, so that the phenomenon that in response to the first MPPT unit in the power optimizer disturbs nears Vo1(or Vo4), the output power Po of the power optimizer jumps from constant power to 0 is effectively avoided, the power optimizer automatically adapts to the disturbance voltage change of the "photovoltaic inverter" connected at the rear stage to effectively balance the competitive relation between the "power optimizer "and the "photovoltaic inverter", and avoid the mismatch shocks situation.

Based on the above-mentioned analysis, in the embodiment, the power optimizer may obtain output power of the power optimizer based on the relation between the actual input power and the pre-generated first mapping curve.

In step S304, bus voltage corresponding to the output power is output to a rear-stage photovoltaic inverter so that the rear-stage photovoltaic inverter determines the target maximum power according to the bus voltage.

The bus voltage corresponding to the output power (DC+, DC-) refers to the output voltage Uo corresponding to the output power Po of the power optimizer.

On the basis of the above-mentioned embodiment, the power optimizer outputs output voltage Uo corresponding to the output power Po to a post-stage photovoltaic inverter so that a second MPPT unit in the post-stage photovoltaic inverter disturbs the bus voltage to obtain the target maximum power of the photovoltaic power generation system.

In conclusion, the embodiments of the invention provide a method for controlling a photovoltaic power generation system, the method includes: input current and input voltage of a power optimizer are acquired; actual input power is obtained according to the input voltage and the input current; output power is obtained according to the actual input power and a pre-generated first mapping curve; the first mapping curve is configured for indicating the corresponding relation between output voltage and the output power of the power optimizer, the first mapping curve includes: a first voltage segment linear power curve and a second voltage segment linear power curve, and the voltage corresponding to a second voltage segment is higher than that corresponding to a first voltage segment; bus voltage corresponding to the output power is output to a post-stage photovoltaic inverter so that the post-stage photovoltaic inverter determines the target maximum power according to the bus voltage. In the solution, the external characteristics of the relation curve of power and voltage of high and low voltage segments of the power optimizer are adjusted, so that in response to the first MPPT unit carries out disturbance near Vo1(or Vo4), output power may be obtained according to the actual input power and the pre-generated first mapping curve, and bus voltage corresponding to the output power is output to the post-stage photovoltaic inverter in order to enable the post-stage photovoltaic inverter to disturb the bus voltage to obtain the target maximum power of photovoltaic power generation system, the phenomenon that in response to the first MPPT unit in the power optimizer carries out disturbance near Vo1 (or Vo4) , the output power Po of the power optimizer jumps from constant power to 0 is effectively avoided, the power optimizer may automatically adapt to the disturbance voltage change of the "photovoltaic inverter" connected at the rear stage, so as to effectively balance the competitive relation between the "power optimizer "and the "photovoltaic inverter", and avoid the mismatch shock situation.

Detailed explanation is made to how output power is obtained according to the actual input power and a pre-generated first mapping curve in accordance with the following embodiments.

Optionally, that before output power is obtained according to the actual input power and a pre-generated first mapping curve, the method may further include the following operations.

The corresponding relations between the first voltage segment and the second voltage segment and the output power are respectively adjusted to obtain the first mapping curve, so that the power optimizer may obtain the output power according to the actual input power and the pre-generated voltage-power first mapping curve, the purpose of balancing the competitive relation between the "power optimizer" and the "photovoltaic inverter" is achieved, and mismatch shock situation is avoided.

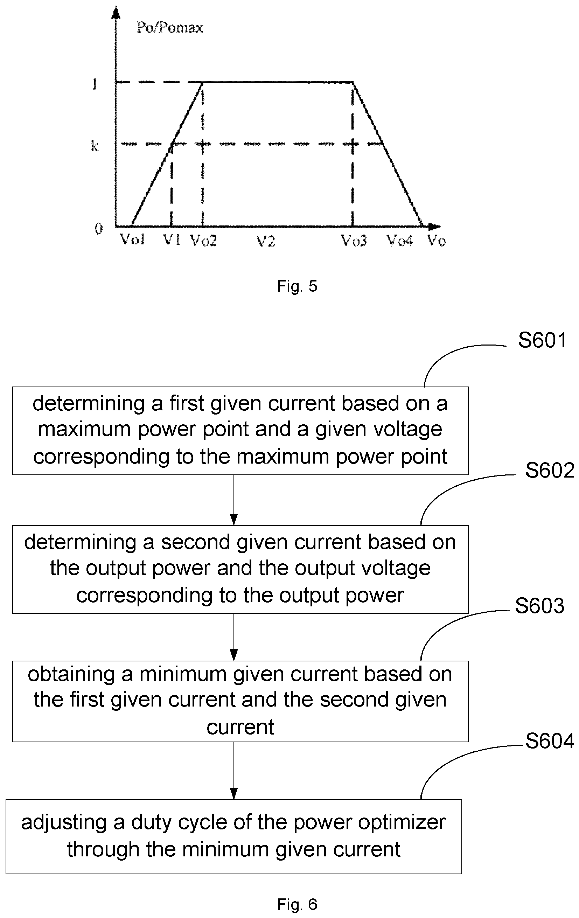

Fig. 5 is a schematic diagram of an external characteristic curve of output voltage and output power of a power optimizer provided by embodiments of the invention; as shown in Fig. 5, the first mapping curve may further include: a third voltage segment constant power segment, and the voltage corresponding to a third voltage segment may be higher than that corresponding to the first voltage segment and lower than that corresponding to the second voltage segment.

The first voltage segment linear power curve may be a linear curve in which power increases with increase of voltage or power decreases with decrease of voltage, and the second voltage segment linear power curve may be a linear curve in which power decreases with increase of voltage or power increases with decrease of voltage.

1. The first voltage segment may be Vo1 to Vo2, in the first voltage segment, the relation between the output power Po and output voltage Uo of the power optimizer may be a positive correlation linear curve, that is, the output power Po of the power optimizer decreases with the decrease of output voltage Uo, it also can be understood as, the output power Po of the power optimizer increases with the increase of output voltage Uo.

In response to the output voltage Uo detected by the power optimizer is within the first voltage segment Vo1 to Vo2, it can also be understood that the bus voltage currently disturbed by the second MPPT unit in the photovoltaic optimizer is within the first voltage segment Vo1 to Vo2. At this time, in response to the first MPPT unit in the power optimizer disturbs in the first voltage segment, it will be found that the output power Po of the power optimizer decreases with the decrease of the output voltage Uo, that is, it can be determined that the current disturbance direction is wrong, the next cycle disturbs in the reverse direction, after several disturbances and observation, the tracking for the maximum output power point of the power optimizer may be realized.

2. The second voltage segment may be Vo3 to Vo4, in the second voltage segment, the relation between the output power Po and output voltage Uo of the power optimizer may be a negative correlation linear curve, that is, the output power Po of the power optimizer decreases with the increase of output voltage Uo, it also can be understood as, the output power Po of the power optimizer increases with the decrease of output voltage Uo.

In response to the output voltage Uo detected by the power optimizer is within the second voltage segment Vo3 to Vo4, it can also be understood that the bus voltage currently disturbed by the second MPPT unit in the photovoltaic optimizer is within the second voltage segment Vo3 to V04. At this time, in response to the first MPPT unit in the power optimizer disturbs in the second voltage segment, it will be found that the output power Po of the power optimizer decreases with the increase of the output voltage Uo, that is, it can be determined that the current disturbance direction is wrong, the next cycle disturbs in the reverse direction, after several disturbances and observation, the tracking for the maximum output power point of the power optimizer may be realized.

In the embodiment, through the first voltage segment linear power curve and the second voltage segment linear power curve in the first mapping curve, the situation that in the process of disturbance of the first MPPT unit in the power optimizer, the output power Po jumps to 0 may be avoided, and in response to the output voltage Uo exceeds the output voltage range, a protection or voltage limit control mechanism of the power optimizer may be triggered.

3. The third voltage segment may be Vo2 to Vo3, the third voltage segment is a constant power curve, that is, the output power Po of the power optimizer is constant with the increase (or decrease) of the output voltage Uo, and the output power Po of the power optimizer is a constant value.

In response to the output voltage Uo detected by the power optimizer is within the third voltage segment Vo2 to Vo3, it can also be understood that the bus voltage currently disturbed by the second MPPT unit in the photovoltaic optimizer is within the third voltage segment Vo2 to Vo3. At this time, in response to the first MPPT unit in the power optimizer disturbs in the third voltage segment, it will be found that the output power Po of the power optimizer is constant with the increase of the output voltage Uo, that is, the output power of the power optimizer may be determined according to the constant power of the third voltage segment and the actual input power of the power optimizer.

It is to be noted that Vo1 and Vo4 need to be included in the input range of the bus voltage (DC+, DC-) of the post-stage photovoltaic inverter, otherwise the normal operation of the post-stage photovoltaic inverter will be affected. The specific values of Vo1 and Vo4 maybe determined according to the input range of the common photovoltaic inverter, it is recommended that they may meet the requirements of the input range of most photovoltaic inverters. In addition, the slope of the first voltage segment linear power curve and the second voltage segment linear power curve should not be set too steep to avoid shock.

Optionally, that S303, output power is obtained according to the actual input power and a pre-generated first mapping curve may include the following operations.

If the bus voltage after disturbance of the post-stage photovoltaic inverter is detected and is in the first voltage segment or the second voltage segment, output power may be obtained according to the first voltage segment linear power curve or the second voltage segment linear power curve.

Specifically, for example, if the power optimizer detects that the bus voltage (DC+, DC-) after disturbance of the post-stage photovoltaic inverter is V1 in Fig. 5, in the first voltage segment Vo1 to Vo2, that is, the output voltage of the power optimizer is Uo = V1, then according to the first voltage segment linear power curve, it may read that the output power corresponding to the output voltage V1 of the power optimizer is Po=k*Pomax.

In the same way, if bus voltage after disturbance of the post-stage photovoltaic inverter is detected and is in the second voltage segment, output power may be obtained according to the second voltage segment constant power curve

In the embodiment, if the actual maximum photovoltaic input power is less than the maximum constant power value of the power optimizer, such as k less than 1, the actual working area is the area below the intersection of the dotted line of the k value and the external characteristics. Since the k value inevitably intersects with the first voltage segment constant power curve or the second voltage segment constant power curve, there is a maximum power interval. If the bus voltage after the disturbance of the post-stage photovoltaic inverter is detected to run in the first voltage segment Vo1-Vo2 or the second voltage segment Vo3-Vo4, it can also be understood that the disturbance of the second MPPT unit of the post-stage photovoltaic inverter flies out of the constant power interval, at this time, the power optimizer enters the high voltage and low voltage limit power segment, that is, the output power Po of the power optimizer may be obtained according to the first voltage segment linear power curve or the second voltage segment linear power curve, and the output power Po of the power optimizer is limited.

Optionally, that S303, output power is obtained according to the actual input power and a pre-generated first mapping curve may further include the following operations.

If bus voltage after disturbance of the post-stage photovoltaic inverter is detected and is in the third voltage segment, output power may be obtained according to the third voltage segment constant power segment.

For example, if the power optimizer detects that the bus voltage (DC+, DC-) after disturbance of the post-stage photovoltaic inverter is V2 in Fig. 5, in the third voltage segment Vo2 to Vo3, that is, the output voltage of the power optimizer is Uo = V2, then according to the third voltage segment linear power curve, it may read that the output power corresponding to the output voltage V2 of the power optimizer is Pomax.

However, the actual input power Pin of the power optimizer and the maximum limit power Pomax further needs to be judged and compared to determine the final output power Po in response to the output voltage of the power optimizer Uo = V2.

In the first case, if the actual input power Pin is less than or equal to the maximum limit power Pomax of the power optimizer, the actual input power is used as the output power.

In the second case, if the actual input power is greater than the maximum limit power, the maximum limit power is as the output power.

"Actual input power Pin of the power optimizer" and "output power of the photovoltaic panel" are the same concept.

Usually, due to the influence of many factors such as weather, the actual output power of the photovoltaic panels may be greater than or less than the maximum limit power Pomax of the power optimizer, if the output power of the photovoltaic panels is greater than or equal to the maximum limit power Pomax of the power optimizer, the output power Po of the power optimizer is equal to the maximum limit power Pomax; if the maximum output capacity of the photovoltaic panels is less than the maximum limit power Pomax of the power optimizer (ratio is less than 1), the output power Po of the power optimizer is equal to the maximum power of the photovoltaic panel, and the maximum power of the photovoltaic panel may be tracked through the first MPPT unit in the power optimizer.

In the embodiment, if bus voltage after disturbance of the post-stage photovoltaic inverter is detected and is in the third voltage segment Vo2-Vo3 (namely, the output voltage of the power optimizer is Vo2-Vo3), the minimum value of the "actual input power" and the "maximum limit power" of the power optimizer is taken as the output power Po of the power optimizer

Fig. 6 is a schematic flow diagram of another method for controlling a photovoltaic power generation system provided by embodiments of the invention; optionally, as shown in Fig. 6, in the above S303, the operation after output power is obtained according to the actual input power and a pre-generated first mapping curve may further include the following operations.

In step S601, a first given current is determined based on MPP and given voltage corresponding to the MPP.

The MPP is obtained by the disturbance of the MPP unit in the power optimizer based on input voltage and input current.

It is to be noted that the MPP unit may also be understood as the first MPPT unit disposed in the power optimizer, the input voltage and input current of the power optimizer are the voltage and current generated by the photovoltaic panel.

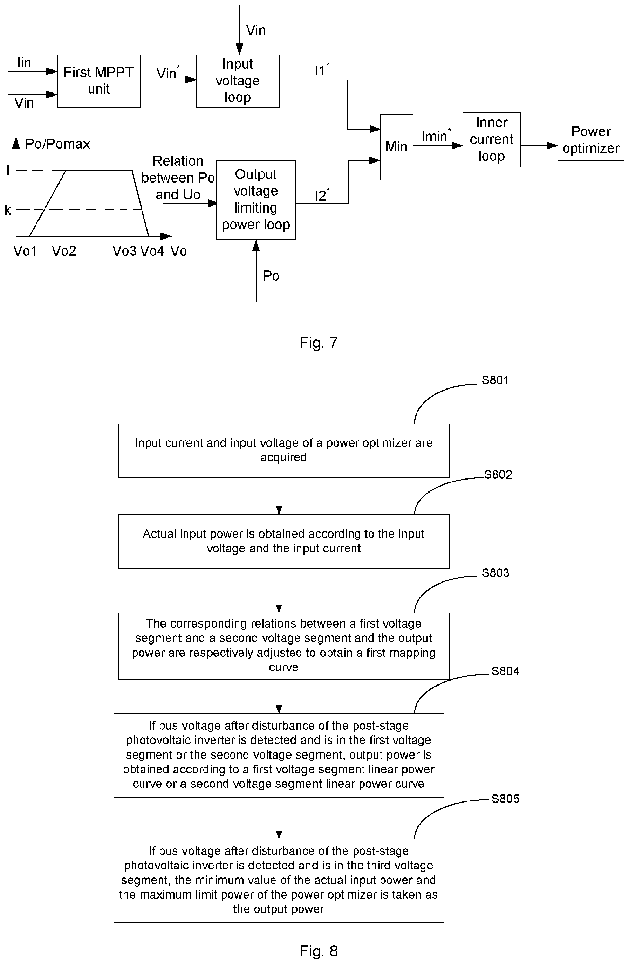

Fig. 7 is a schematic diagram of working principle of an MPPT unit and an output voltage limiting power loop in a power optimizer in a method for controlling a photovoltaic power generation system provided by embodiments of the invention. As shown in Fig. 7, the first MPPT unit perturbs the voltage and current generated by the photovoltaic panel, and tracks the maximum power point of the photovoltaic panel and the given voltage Vin* corresponding to the maximum power point, and transmits the given voltage Vin* to an input voltage inner loop, so that the first given current I1* may be determined according to the given voltage Vin*.

In step S602, a second given current is determined based on the output power and output voltage corresponding to the output power.

In the embodiment, the output power Po corresponding to the output voltage Uo is obtained based on the relation curve between the output power Po of the power optimizer and the output voltage Uo, and the second given current I2* is calculated from an output voltage limiting power loop.

In step S603, a minimum given current is obtained based on the first given current and the second given current.

In step S604, a duty cycle of the power optimizer is adjusted through the minimum given current.

On the basis of the above embodiments, for example, the first given current I1* and the second given current I2* are compared, the minimum value of the first given current I1* and the second given current I2* is taken as the minimum given current Imin*, and the minimum given current Imin* is transferred to an inner current loop as the reference given.

Usually, the power optimizer is further provided with an MOSFET, so a current loop controller may use the minimum given current to achieve the change of duty cycle D of the MOSFET, thus generating disturbance of current and achieving the purpose of stabilizing the output voltage.

Fig. 8 is a schematic diagram of an overall process of a method for controlling a photovoltaic power generation system provided by embodiments of the invention. Optionally, as shown in Fig. 7, the method include the following steps:
In step S801, input current and input voltage of the power optimizer are acquired.
In step S802, actual input power is obtained based on the input voltage and the input current.
In step S803, the corresponding relations between the first voltage segment and the second voltage segment and the output power are respectively adjusted to obtain the first mapping curve.
In step S804, in response to the bus voltage after disturbance of the post-stage photovoltaic inverter being detected and being in the first voltage segment or the second voltage segment, output power is obtained based on the first voltage segment linear power curve or the second voltage segment linear power curve.
In step S805, in response to bus voltage after disturbance of the post-stage photovoltaic inverter being detected and being in the third voltage segment, the minimum value of the actual input power and the maximum limit power of the power optimizer is taken as the output power.

Optionally, the specific implementation of the overall steps of the method for controlling the photovoltaic power generation system provided by the embodiments and the beneficial effects produced have been described in detail in the above-mentioned specific embodiments, and will not be repeated here.

Fig. 9 is a schematic structure diagram of an apparatus for controlling a photovoltaic power generation system provided by embodiments of the invention. As shown in Fig. 9, the apparatus for controlling a photovoltaic power generation system include: an acquisition module 901, a processing module 902 and a determination module 903.

The acquisition module 901 may be configured to acquire input current and input voltage of a power optimizer.

The processing module 902 may be configured to obtain actual input power according to the input voltage and the input current, and obtain output power according to the actual input power and a pre-generated first mapping curve; the first mapping curve is configured for indicating the corresponding relation between output voltage and the output power of the power optimizer, the first mapping curve include: a first voltage segment linear power curve and a second voltage segment linear power curve, and the voltage corresponding to a second voltage segment is higher than that corresponding to a first voltage segment.

The determination module 903 may be configured to output bus voltage corresponding to the output power to a post-stage photovoltaic inverter so that the post-stage photovoltaic inverter determines the target maximum power according to the bus voltage.

Optionally, the first mapping curve may further include: a third voltage segment constant power segment, and the voltage corresponding to a third voltage segment may be higher than the voltage corresponding to the first voltage segment and lower than the voltage corresponding to the second voltage segment.

The first voltage segment linear power curve may be a linear curve in which power increases with increase of voltage, and the second voltage segment linear power curve may be a linear curve in which power decreases with increase of voltage.

Optionally, the processing module 902 may be further configured to:
in response to the bus voltage after disturbance of the post-stage photovoltaic inverter being detected and being in the first voltage segment or the second voltage segment, output power may be obtained according to the first voltage segment linear power curve or the second voltage segment linear power curve.

Optionally, the processing module 902 may be further configured to:
in response to bus voltage after disturbance of the post-stage photovoltaic inverter being detected and being in the third voltage segment, output power may be obtained according to the third voltage segment constant power segment.

Optionally, the processing module 902 may be further configured to:
in response to the actual input power being less than or equal to the maximum limit power of the power optimizer, the actual input power may be taken as the output power.

Optionally, the processing module 902 may be further configured to:
in response to the actual input power being greater than the maximum limit power, the maximum limit power may be taken as the output power.

Optionally, the apparatus further includes an adjusting module.

The adjusting module may be configured to adjust corresponding relations between the first voltage segment and the second voltage segment and the output power respectively to obtain the first mapping curve.

Optionally, the adjusting module may be further configured to:
adjust the corresponding relation between the first voltage segment and the output power to the linear relation that power increases with increase of voltage;
adjust the corresponding relation between the second voltage segment and the output power to the linear relation that power decreases with increase of voltage.

Optionally, the processing module 902 may be further configured to:
determine a first given current according to an MPP and a given voltage corresponding to the MPP; the MPP is an MPP unit in the power optimizer and is obtained by carrying out disturbance according to input voltage and input current; determine a second given current according to the output power and output voltage corresponding to the output power; and obtain a minimum given current according to the first given current and the second given current.

The apparatus may further include: an adjusting module, the adjusting module may be configured to adjust a duty cycle of the power optimizer by using the minimum given current.

The above apparatus is used to execute the method provided by the foregoing embodiments, and its implementation principle and technical effect are similar, which are not elaborated here.

The above modules may be at least one integrated circuits configured to implement the above method, for example, at least one Application Specific Integrated Circuits (ASICs), or at least one Digital Signal Processors (DSPs), or at least one Field Programmable Gate Arrays (FPGAs), etc. For another example, in response to one of the above modules being implemented in the form of a processing element scheduling program code, the processing element may be a general-purpose processor, such as a Central Processing Unit (CPU) or another processor that can call the program code. For another example, these modules may be integrated together and implemented in the form of a System-on-a-Chip (SOC).

Optionally, the invention further provides a program product, such as a computer-readable storage medium. The program product may include a program, and in response to executed by a processor, the program is used to execute the above method embodiments.

In the several embodiments provided in the invention, it should be understood that the disclosed apparatus and method may be implemented in other manners. For example, the apparatus embodiments described above are only schematic. For example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, namely they may be located in the same place, or may be distributed to multiple network units. Part or all of the units may be selected to achieve the purposes of the solutions of the embodiments according to a practical requirement.

In addition, each function unit in each embodiment of the invention may be integrated into a processing unit, or each unit may exist independently, or two or more than two units may also be integrated into a unit. The integrated unit may be implemented in a hardware form and may also be implemented in form of hardware and software functional unit.

The integrated unit realized in form of software functional unit may be stored in a computer-readable storage medium. The above-mentioned software functional unit is stored in a storage medium, and includes a plurality of instructions to enable a computer device (which may be a personal computer, a server, or a network device, etc.) or a processor to execute some steps of the method described in various embodiments of the invention. The above-mentioned storage medium includes: any medium that can store program code, such as a USB flash drive, a removable hard disk, a Read - Only Memory (ROM), a Random Access Memory (RAM), a magnetic disk, or an optical disc.

### Industrial Applicability

The invention provides a method and apparatus for controlling photovoltaic power generation system, a power optimizer, and a storage medium. The method includes: input current and input voltage of a power optimizer are acquired; actual input power is obtained based on the input voltage and the input current; output power is obtained based on the actual input power and a pre-generated first mapping curve; the first mapping curve is configured for indicating the corresponding relation between output voltage and the output power of the power optimizer, the first mapping curve includes: a first voltage segment linear power curve and a second voltage segment linear power curve, and the voltage corresponding to a second voltage segment is higher than the voltage corresponding to a first voltage segment; bus voltage corresponding to the output power is output to a post-stage photovoltaic inverter so that the post-stage photovoltaic inverter determines the target maximum power according to the bus voltage. With the solution, the competitive relation between the "power optimizer" and the "photovoltaic inverter" may be effectively balanced, and the situation of mismatch shock may be avoided.

In addition, it can be understood that the method and apparatus for controlling the photovoltaic power generation system, the power optimizer, and the storage medium reproducible and may be used in a variety of industrial applications. For example, the method and apparatus for controlling the photovoltaic power generation system, the power optimizer, and the storage medium may be used in the technical filed of power electronics.

## Claims

1. A method for controlling a photovoltaic power generation system, applied to a power optimizer in the photovoltaic power generation system, wherein the method comprises:
acquiring an input current and an input voltage of the power optimizer;
obtaining an actual input power based on the input voltage and the input current;
obtaining an output power based on the actual input power and a pre-generated first mapping curve; wherein the first mapping curve is used for indicating a corresponding relation between an output voltage and the output power of the power optimizer, the first mapping curve comprises: a first voltage segment linear power curve and a second voltage segment linear power curve, wherein a voltage corresponding to a second voltage segment is higher than the voltage corresponding to a first voltage segment;
outputting a bus voltage corresponding to the output power to a post-stage photovoltaic inverter so that the post-stage photovoltaic inverter determines a target maximum power based on the bus voltage.

2. The method as claimed in claim 1, wherein the first mapping curve further comprise: a third voltage segment constant power segment, wherein a voltage corresponding to a third voltage segment is higher than the voltage corresponding to the first voltage segment and the voltage corresponding to the third voltage segment is lower than the voltage corresponding to the second voltage segment;
the first voltage segment linear power curve is a linear curve in which power increases with increase of voltage or power decreases with decrease of voltage, and the second voltage segment linear power curve is a linear curve in which power decreases with increase of voltage or power increases with decrease of voltage.

3. The method as claimed in claim 2, wherein that obtaining output power based on the actual input power and the pre-generated first mapping curve comprise:
in response to detecting that the bus voltage after disturbance of the post-stage photovoltaic inverter is in the first voltage segment or the second voltage segment, obtaining the output power based on the first voltage segment linear power curve or the second voltage segment linear power curve.

4. The method as claimed in claim 3, further comprising:
in response to detecting that the bus voltage after disturbance of the post-stage photovoltaic inverter is in the third voltage segment, obtaining the output power based on the third voltage segment constant power segment.

5. The method as claimed in claim 4, wherein that obtaining the output power based on third voltage segment constant power segment comprises:
in response to the actual input power being less than or equal to the maximum limit power of the power optimizer, determining the actual input power as the output power.

6. The method as claimed in claim 5, further comprising:
in response to the actual input power being greater than the maximum limit power, determining the maximum limit power as the output power.

7. The method as claimed in any of claims 1-6, before obtaining the output power based on the actual input power and the pre-generated first mapping curve, further comprising:
adjusting the corresponding relation between the first voltage segment and the output power and the corresponding relation between the second voltage segment and the output power to obtain the first mapping curve.

8. The method as claimed in claim 7, wherein adjusting the corresponding relations between the first voltage segment and the second voltage segment and the output power respectively comprises:
adjusting the corresponding relation between the first voltage segment and the output power to the linear relation that the power increases with increase of the voltage;
adjusting the corresponding relation between the second voltage segment and the output power to the linear relation that the power decreases with increase of the voltage.

9. The method as claimed in any of claims 1-8, further comprising: after the output power is obtained based on the actual input power and the pre-generated first mapping curve,
determining a first given current based on a maximum power point and a given voltage corresponding to the maximum power point; wherein the maximum power point is obtained by disturbance of a maximum power point unit in the power optimizer based on the input voltage and the input current;
determining a second given current based on the output power and an output voltage corresponding to the output power;
obtaining a minimum given current based on the first given current and the second given current;
adjusting a duty cycle of the power optimizer through the minimum given current.

10. An apparatus for controlling a photovoltaic power generation system, comprising an acquisition module, a processing module and a determination module;
the acquisition module, configured to acquire input current and input voltage of a power optimizer;
the processing module, configured to obtain an actual input power based on the input voltage and the input current, and obtain an output power based on the actual input power and a pre-generated first mapping curve; wherein the first mapping curve is configured for indicating the corresponding relation between an output voltage and the output power of the power optimizer, the first mapping curve comprises: a first voltage segment linear power curve and a second voltage segment linear power curve, wherein the voltage corresponding to a second voltage segment is higher than the voltage corresponding to a first voltage segment;
the determination module, configured to an output bus voltage corresponding to the output power to a post-stage photovoltaic inverter so that the post-stage photovoltaic inverter determines a target maximum power based on the bus voltage.

11. The apparatus for controlling a photovoltaic power generation system as claimed in claim 10, wherein the first mapping curve further comprises: a third voltage segment constant power segment, wherein the voltage corresponding to a third voltage segment is higher than the voltage corresponding to the first voltage segment and lower than the voltage corresponding to the second voltage segment;
the first voltage segment linear power curve may be a linear curve in which power increases with increase of voltage or power decreases with decrease of voltage, and the second voltage segment linear power curve is configured to be a linear curve in which power decreases with increase of voltage or power increases with decrease of voltage.

12. The apparatus for controlling a photovoltaic power generation system as claimed in claim 11, wherein the processing module is further configured to: in response to the bus voltage after disturbance of the post-stage photovoltaic inverter being detected and being in the first voltage segment or the second voltage segment, obtaining the output power based on the first voltage segment linear power curve or the second voltage segment linear power curve.

13. The apparatus for controlling a photovoltaic power generation system as claimed in claim 12, wherein the processing module is further configured to:
in response to the bus voltage after disturbance of the post-stage photovoltaic inverter being detected and being in the third voltage segment, obtaining the output power based on the third voltage segment constant power segment.

14. The apparatus for controlling a photovoltaic power generation system as claimed in claim 13, wherein the processing module is further configured to: in response to the actual input power being less than or equal to the maximum limit power of the power optimizer, determining the actual input power as the output power.

15. The apparatus for controlling a photovoltaic power generation system as claimed in claim 14, wherein the processing module is further configured to:
in response to the actual input power being greater than the maximum limit power, determining the maximum limit power as the output power.

16. The apparatus for controlling a photovoltaic power generation system as claimed in any of claims 10-15, further comprising an adjusting module, wherein the adjusting module is configured to adjust the corresponding relations between the first voltage segment and the second voltage segment and the output power respectively to obtain the first mapping curve.

17. The apparatus for controlling a photovoltaic power generation system as claimed in claim 16, wherein the adjusting module is further configured to:
adjust the corresponding relation between the first voltage segment and the output power to the linear relation that the power increases with increase of the voltage;
adjust the corresponding relation between the second voltage segment and the output power to the linear relation that the power decreases with increase of the voltage.

18. The apparatus for controlling a photovoltaic power generation system as claimed in any of claims 10-17, further comprising an adjusting module,
wherein the processing module is further configured to: determine a first given current based on a maximum power point and a given voltage corresponding to the maximum power point; wherein the maximum power point is obtained by disturbance of a maximum power point unit in the power optimizer based on the input voltage and input current.; determine a second given current based on the output power and the output voltage corresponding to the output power;
and obtaining a minimum given current based on the first given current and the second given current; and
the adjusting module is configured to adjust a duty cycle of the power optimizer through the minimum given current.

19. A power optimizer, further comprising: at least one processor, a storage medium and at least one bus, the storage medium stores at least one computer -readable instruction executable by the at least one processor, in response to the power optimizer executing, the at least one processor communicates with the storage medium through the bus, and the at least one processor executes the computer -readable instruction to execute the steps of the method as claimed in any of claims 1-9.

20. A computer readable storage medium, a computer program being stored on the storage medium, wherein in response to executing by at least one processor, the computer program executes the processes of the method as claimed in any one of claims 1-9.
